# EUROPÄISCHE PATENTANMELDUNG

(11) **EP 1 243 375 A2**
(43) Veröffentlichungstag der Anmeldung: **25.09.2002**
(21) Anmeldenummer: 01122912.7
(22) Anmeldetag: 25.09.2001
(51) Int. Cl.: B23Q 1/01, B23Q 39/04

(54) **Trommel für eine Mehrspindeldrehmaschine**

(30) Priorität: 23.03.2001 IT MI010168
(71) Anmelder: TAJMAC - MTM S.p.A., 20092 Cinisello Balsamo (IT)
(72) Erfinder: Tajariol, Andrea, Frazione Vergo Zoccorino, Besana Brianza (IT)
(74) Vertreter: Mayer, Hans Benno, Dipl.-Ing.

(57) **Zusammenfassung**

Trommel für eine Mehrspindeldrehmaschine mit einer Serie von in Umfangsrichtung angeordneten Durchgangsbohrungen zur Aufnahme von Werkstückaufnahmespindeln, wobei der Winkel, der von den Geraden eingeschlossen wird, welche die Achsen (y) der Werkstückaufnahmespindeln mit der Achse (Z) der Trommeln verbinden, 36° entspricht und der Trommelkörper aus zwei aussenliegenden Scheiben besteht, wobei zwischen diesen Scheiben ein Körper zwischengelagert ist, der in Axialrichtung und in Übereinstimmung mit den Durchgangsbohrungen an seinem Umfang Verdickungen aufweist, die in Radialrichtung abstehen und zwischen stets zwei Verdickungen ein Tal gebildet ist.

## Beschreibung

Die vorstehende Erfindung betrifft eine Trommel für eine Mehrspindeldrehmaschine.

Es sind aus dem Stand der Technik Trommeln für Mehrspindeldrehmaschinen bekannt geworden, die z.B. mit sechs Werkstückaufnahmespindeln zum Zuführen und Spannen der zu bearbeitenden, stangenförmigen Werkstücke ausgerüstet sind.

Die bekannten Maschinen haben sich als bewährt erwiesen und dienen zur spanabhebenden Bearbeitung in schrittweiser Folge von Werkstücken mit komplexer Formgebung.

Üblicherweise werden in einer ersten Maschine grobe Bearbeitungsvorgänge der Werkstücke vorgenommen und

Feinbarbeitung der Werkstücke unter Zuhilfenahme einer zweiten Maschine durchgeführt, wobei in dieser zweiten Maschine auf das halbfertig bearbeitete Werkstück eingewirkt wird, um die Endbearbeitung oder Feinbearbeitung des Werkstückes durchzuführen.

Der Einsatz von zwei Drehmaschinen bringt erhebliche Nachteile mit sich, sei es aufgrund wirtschaftlicher Überlegungen, sei es von der Genauigkeit der Bearbeitungsvorgänge her gesehen.

Diese Nachteile sind dem Fachmann auf dem einschlägigen Fachgebiet bekannt.

Es ist bekannt, dass ein Grossteil der durchzuführenden Bearbeitungsvorgänge auf einer ersten Drehmaschine vorgenommen wird und nur wenige Arbeiten einer Endbearbeitung oder Feinbearbeitung, unter Verwendung einer zweiten Maschine durchzuführen sind.

Aufgabe der vorstehenden Erfindung ist es, die Nachteile des Standes der Technik zu vermeiden und eine Trommel für eine Mehrspindeldrehmaschine vorzuschlagen, die es erlaubt, unter Einsatz einer einzigen Werkzeugmaschine und einer einzigen Einspannung des Werkzeuges, sowohl grobe Bearbeitungsvorgänge als auch Feinbearbeitungs- oder Endbearbeitungsvorgänge auf einer Maschine durchzuführen und am Ende des Bearbeitungsvorganges, der in einer einzigen Maschine durchführbar ist, ein fertiges Werkstück vorliegen zu haben.

Eine weitere Aufgabe der Erfindung besteht darin, eine Werkstückaufnahmetrommel vorzuschlagen, die trotz ihrer erheblichen Abmessungen ein eingeschränktes Gewicht aufweist und sich des weiteren durch grosse Steifigkeit kennzeichnet.

Die Aufgabe, die der vorstehenden Erfindung zugrunde liegt, wird mit einer Trommel für eine Mehrspindeldrehmaschine dadurch gelöst, dass in Umfangsrichtung der Trommel eine Anzahl von Durchgangsbohrungen vorgesehen ist, die sich parallel zur Achse der Trommel erstrecken und eine Anzahl von Werkstückaufnahmespindeln zum Spannen des Werkstückes aufnehmen und dadurch gekennzeichnet ist, dass der Winkel (α), der von den Geraden eingeschlossen wird, welche die Achsen nebeneinanderliegender Werkstückaufnahmespindeln mit der Achse der Trommel verbinden, 36° entspricht, und der Trommelkörper aus zwei, aussenliegenden Scheiben besteht, die mit Durchgangsbohrungen ausgerüstet sind, um die Werkstückaufnahmespindeln aufzunehmen, und zwischen diesen Scheiben ein Körper vorgesehen ist, der in Axialrichtung der Trommel und in Übereinstimmung mit den Durchgangsbohrungen, radial abstehende Verdickungen aufweist und zwischen zwei nebeneinanderliegenden Verdickungen ein Tal gebildet ist.

### Mit anderen Worten:

Der Öffnungswinkel (α), der durch zwei Ebenen begrenzt wird, auf denen die Trommelachse zu liegen kommt, und auf welchen die Achsen von zwei nebeneinanderliegenden Durchgangsbohrungen liegen, einem Winkel von 36° entspricht.

Mit einer Trommel, die diese Merkmale aufweist, wird die Möglichkeit geschaffen, zehn Durchgangsbohrungen in die Trommel einzuarbeiten; diese Bohrungen sind in der Lage, zehn Werkstückaufnahmespindeln zum Spannen der zu bearbeitenden Werkstücke aufzunehmen.

Daraus folgt, dass die Leistungsfähigkeit der Maschine gegenüber bekannten Maschinen dieser Art wesentlich vergrössert werden kann.

Die Werkstücke können einer Grobbearbeitung sowie einer Feinbearbeitung in einer einzigen Maschine und in einer einzigen Aufspannung unterzogen werden.

Trotz der unvermeidbaren Vergrösserung des vorgeschlagenen Trommeldurchmessers wird, dank der Vorsehung der Verstärkungsrippen, die sich mit Tälern abwechseln und in Umfangsrichtung der Trommel vorgesehen sind, eine leichte, aber ausgesprochen steife Trommel geschaffen, besonders in Übereinstimmung mit den gegenseitig angenäherten Ausnehmungen, welche die Werkstückaufnahmespindeln zum Spannen des Werkstückes aufnehmen unter Berücksichtigung der Tatsache, dass in diesen Zonen der Trommelkörper einer grösseren Belastung ausgesetzt ist.

Weitere Vorteile der Erfindung können der folgenden Beschreibung, den Ansprüchen sowie den beigefügten Zeichnungen entnommen werden.

Es zeigen:
Figur 1 die Trommel für eine Mehrspindeldrehmaschine in perspektivischer Ansicht;
Figur 2 die Trommel mit axial angeordneten Bohrungen zur Aufnahme der Werkstückaufnahmespindeln in Vorderansicht; und

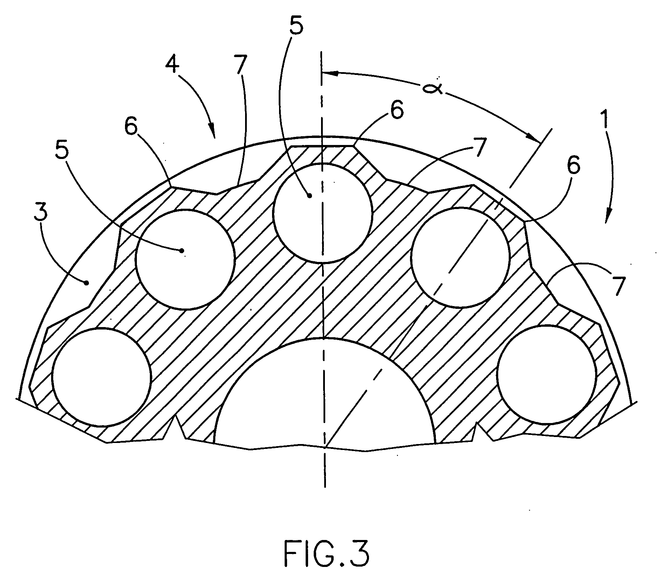

Figur 3 ein Detail der Trommel im Querschnitt unter Darstellung der Bohrungen zur Aufnahme der Werkstückaufnahmespindeln zum Spannen der Werkstücke mit den dazugehörigen Verdickungen, die sich mit Tälern abwechseln.

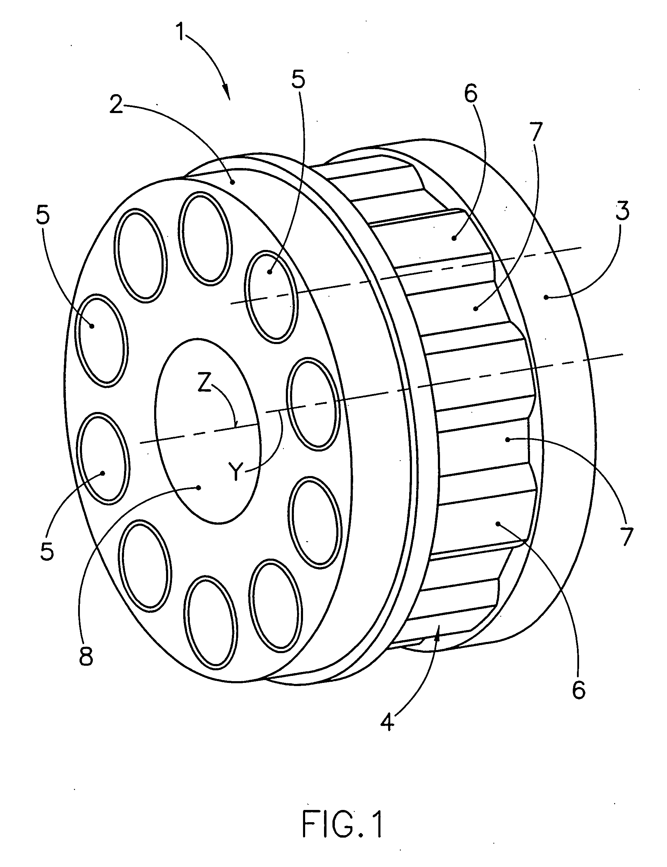

Wie der Figur 1 zu entnehmen ist, weist die Mehrspindeldrehmaschine eine gesamthaft mit 1 gekennzeichnete Trommel auf.

Die Trommel 1 besteht aus einer ersten Scheibe 2 sowie einer zweiten Scheibe 3, zwischen den Scheiben 2 und 3 befindet sich ein mittig angeordneter Körper 4.

Der genannte Trommelkörper 1 wird in Axialrichtung von Bohrungen 5 durchdrungen, die in Umfangsrichtung der Trommel 1 angeordnet sind.

Die Achsen Y der Bohrungen 5 sind parallel zur Hauptachse Z der Trommel 1 angeordnet.

Die Bohrungen 5 nehmen in einer für einen Fachmann bekannten Weise Werkstückaufnahmespindeln auf, die dazu bestimmt sind, die zu bearbeitenden Materialstangen (nicht dargestellt) zu spannen.

Am Umfang und in Übereinstimmung mit jeder Bohrung 5 weist der Körper 4 Verstärkungenrippen 6 auf, die radial nach aussen abstehen.

Die Rippen 6 führen zu einer grossen Steifigkeit der Trommel, besonders in der Nähe der Durchgangsbohrungen 5, wo die Trommel grösseren, mechanischen Belastungen während der Bearbeitungsvorgänge der Werkstücke ausgesetzt ist.

Um die Trommel 1 möglichst leicht auszugestalten, werden an den weniger belasteten Stellen, d.h. zwischen jeweils zwei nebeneinanderliegenden Verstärkungsrippen 6, Täler 7 gebildet.

Es ist darauf hinzuweisen, dass die Trommel 1 eine mittige Ausnehmung 8 aufweist, die vom Stand der Technik her bekannt ist und für die Montage der Trommel 1 auf einer drehbar angeordneten Welle (nicht dargestellt) dient.

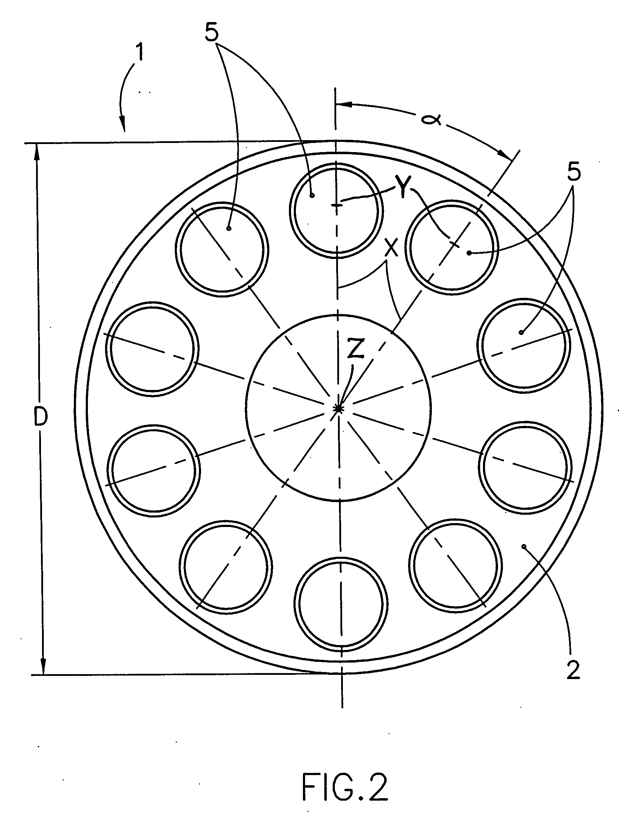

Der Figur 2, welche die Trommel 1 in Vorderansicht darstellt, kann entnommen werden, dass die Achsen X von zwei nebeneinander angeordneten Bohrungen einen Winkel (α) einschliessen, der erfindungsgemäss 36° entspricht.

### Mit anderen Worten:

Der Öffnungswinkel (α), der von zwei Ebenen begrenzt wird, die zwischen der Trommelachse und den Achsen von zwei nebeneinander liegenden Durchgangsbohrungen eingeschlossen sind, entspricht 36°.

Wie deutlich der Figur 2 zu entnehmen ist, wird es ermöglicht, die Trommel mit zehn Aufnahmebohrungen auszurüsten, welche die Aufnahmen für zehn Werkstückaufnahmespindeln bilden. Es wird somit die Möglichkeit geschaffen, zehn zu bearbeitende Stangen zu spannen und zehn Positionen zu schaffen, in denen die verschiedenen Bearbeitungsvorgänge an den stangenförmigen Werkstücken durchgeführt werden.

Es besteht daher die Möglichkeit, in einer einzigen Maschine und in einer einzigen Einspannung des Werkstückes eine erste grobe, spanabhebende Bearbeitung sowie eine Endbearbeitung des Werkstückes, durchzuführen.

Da der Durchmesser (D) der Trommel mit Zunahme der Bohrungen 5 wächst, wird auch das Gewicht der gesamten Trommel 1 zunehmen und gleichzeitig wird sich eine Verminderung der Steifigkeit gegen mechanische Belastungen der Trommel, aufgrund einer unvermeidbaren Schwächung des Trommelkörpers wegen der grösseren Anzahl von Bohrungen, die in Umfangsrichtung des Trommelkörpers angeordnet sind, eintreten.

Um dem entgegenzuwirken, wie dies besonders aus den Figuren 1 und 2 zu entnehmen ist, ist der Körper 4, der das zentrale Teilstück der Trommel 1 bildet, in Übereinstimmung mit den Durchgangsbohrungen 5 durch Rippen 6 verstärkt.

Diese Verstärkungsrippen weisen im Querschnitt Trapezform auf und zwischen den Verstärkungsrippen 6 sind Täler 7 gebildet, die sich parallel zu den Rippen 6 erstrecken.

Die Rippen 6, die Trapezform aufweisen, verjüngen sich in Radialrichtung zur Aussenseite der Trommel.

Durch diese Massnahme wird eine ausgesprochen steife Trommel 1 gebildet, besonders in Übereinstimmung mit den Durchgangsbohrungen 5 und gleichzeitig, aufgrund der Vorsehung der Täler 7, wird eine leichte Bauweise für die Trommel 1 erzielt.

## Patentansprüche

1. Trommel (1) für eine Mehrspindeldrehmaschine, mit einer Serie von Durchgangsbohrungen (5), die in Umfangsrichtung der Trommel (1) angeordnet sind, und sich parallel zur Achse (2) der Trommel (1) erstrecken und für die Aufnahme einer Anzahl von Werkstückaufnahmespindeln dienen, **dadurch gekennzeichent,** dass der Winkel (α), der zwischen Geraden (X), welche die Achse (Y) von nebeneinanderliegenden Werkstückaufnahmespindeln mit den Achsen (Z) der Trommel verbinden, einem Winkel von 36° entspricht und der Trommelkörper (1) aus zwei aussenliegenden Scheiben (2, 3) besteht, die Bohrungen (5) zur Aufnahme der Werkstückaufnahmespindeln aufweisen und dass zwischen den Scheiben (2, 3) ein Körper (4) vorgesehen ist, der in Axialrichtung der Trommel (1), in Übereinstimmung mit den Durchgangsbohrungen (5) Verdickungen (6) aufweist, die in Radialrichtung abstehen und dass zwischen zwei nebeneinanderliegenden Verdickungen (6) ein Tal (7) gebildet ist.

2. Trommel (1) für eine Mehrspindeldrehmaschine, nach Patentanspruch 1, **dadurch gekennzeichnet, dass** die Verdickungen (6) zur Versteifung der Trommel (1) im Querschnitt Trapezform aufweisen und sich radial zur Aussenseite der Trommel (1) verjüngen.

3. Trommel (1) für eine Mehrspindeldrehmaschine, nach Patentanspruch 1, **dadurch gekennzeichnet, dass** die Täler (7) im Querschnitt Trapezform aufweisen und sich radial zum Inneren der Trommel (1) hin verjüngen.

4. Trommel (1) für eine Mehrspindeldrehmaschine, nach Patentanspruch 1, **dadurch gekennzeichnet, dass** die Trommel (1) zehn Bohrungen (6) aufweist und dass die Achse (Y) einer jeden Bohrung (5) parallel zur Achse (Z) der Aufnahmewelle für die Trommel (1) in einer Ausnehmung (8) gelagert ist, um welche sich die Welle (1) dreht.

5. Trommel (1) für eine Mehrspindeldrehmaschine, nach Patentanspruch 1, **dadurch gekennzeichnet, dass** der Öffnungswinkel (α) der von zwei Ebenen begrenzt wird, auf denen die Achse der Trommel zu liegen kommt und auf denen die Achsen von zwei nebeneinanderliegenden Bohrungen angeordnet sind, einem Winkel von 36° entspricht.
